# EUROPÄISCHE PATENTSCHRIFT

(11) **EP 0 843 629 B1**
(45) Veröffentlichungstag und Bekanntmachung des Hinweises auf die Patenterteilung: **03.04.2002**
(21) Anmeldenummer: 96946074.0
(22) Anmeldetag: 12.12.1996
(51) Int. Cl.: B60R 25/04

(54) **SICHERHEITSANORDNUNG GEGEN UNBEFUGTEN EINGRIFF**
SECURITY ARRANGEMENT FOR PREVENTING UNAUTHORIZED INTERVENTION
SYSTEME DE SECURITE PROTEGEANT CONTRE LES MANIPULATIONS NON AUTORISEES

(30) Priorität: 15.05.1996 DE 19619592
(43) Veröffentlichungstag der Anmeldung: 27.05.1998
(73) Patentinhaber: ROBERT BOSCH GMBH, 70442 Stuttgart (DE)
(72) Erfinder: MAIER, Claus, D-71642 Ludwigsburg (DE); ALVAREZ-AVILA, Carlos, D-71691 Freiberg (DE); HABERER, Helmut, D-70460 Stuttgart (DE)
(86) Internationale Anmeldenummer: DE9602388
(87) Internationale Veröffentlichungsnummer: WO9743150

(56) Entgegenhaltungen:
- EP-A- 0 629 532
- FR-A- 969 465
- FR-A- 2 698 836
- US-A- 4 726 202

## Beschreibung

### Stand der Technik

Die Erfindung geht von einer Sicherheitsanordnung nach der Gattung des Patentanspruchs 1 aus. Bei einer solchen durch die EP-A1-0 629 532 bekannten Anordnung ist ein einfacher Deckel vorgesehen, der eine elektrische Schaltung einschließend ein Magnetventil an einer Kraftstoffeinspritzpumpe umschließt. Der Deckel und die diesen mit der Kraftstoffeinspritzpumpe verbindende Schraubverbindung sind dabei so angeordnet, daß die Schraubverbindung nach Einbau der Einspritzpumpe nicht mehr zugänglich ist. Erst durch Entfernen der Pumpe kann der Deckel abgeschraubt und ein Zugang zu dem Magnetventil geschaffen werden. Solche Magnetventile dienen bei Kraftstoffeinspritzpumpen dazu, die Kraftstoffzufuhr zu den Pumpenarbeitsräumen der Kraftstoffeinspritzpumpe beim Stillstand bzw. Abstellen der Brennkraftmaschine zu verhindern. Vor Inbetriebnahme der Brennkraftmaschine muß ein solches Magnetventil geöffnet werden. Dies geschieht durch eine elektrische Steuereinrichtung, von der ein Teil bei der bekannten Ausführung innerhalb der Abdeckung liegt.

Will eine Person unbefugt die Brennkraftmaschine in Gang setzen, so könnte dies dadurch geschehen, daß am Magnetventil manipuliert wird. Dies ist allerdings nur möglich, wenn dieses auch zugänglich ist. Die sich unter der Abdeckung befindliche elektrische Schaltung verhindert, daß von außerhalb der Abdeckung ohne weiteres am Magnetventil manipuliert werden kann. Über Sicherheitscode und andere Sicherheitsmaßnahmen ist der elektrische Zugang zu dem Magnetventil verwehrt. Ein mechanischer Eingriff könnte nichts desto trotz die Funktionsfähigkeit des Magnetventils außer Kraft setzen und diese grundsätzlich in Offenstellung bringen. Damit wäre ein Entwenden des zu der Brennkraftmaschine gehörenden Fahrzeugs ermöglicht.

Die bekannte Sicherheitsanordnung soll dieses durch die vorgesehene Abdeckung verhindern. Die dort vorgesehene Abdeckung ist jedoch als einfaches Blechteil ausgeführt, das dennoch gewaltsam unter Eingriff von Hebelwerkzeugen oder schneidenden Werkzeugen geöffnet werden kann. In dem Falle wäre wiederum ein direkter Zugang zu dem Magnetventil ermöglicht.

### Vorteile der Erfindung

Die erfindungsgemäße Sicherheitsanordnung hat dem gegenüber den Vorteil, daß nicht nur ein Funktionselement (wie z. B. das Magnetventil) durch das kappenförmige Element vor einem Zugriff geschützt ist einschließlich einer elektrischen Haltung, die den elektrischen Zugriff zum Magnetventil schützt, sondern bereits der Versuch, gewaltsam an das Funktionselement heranzukommen, zu einer bleibenden Funktionsstörung der Kraftstoffversorgungseinrichtung führt. Beim Versuch, gewaltsam an das Funktions- oder Einstellelement heranzukommen, erfolgt bei Überschreiten einer bestimmten zerstörerischen Kraft ein Bruch, durch den ein Einstell- oder Funktionselement außer Funktion gesetzt wird, aus seiner für seine Funktion notwendigen Lage gebrochen wird oder eine Begrenzungswand von kraftstoffführenden Räumen der Kraftstoffversorgungseinrichtung durchbrochen wird, so daß Kraftstoff austreten kann und auch aus diesem Grunde die Funktion der Kraftstoffversorgungseinrichtung bleibend und nicht ohne weiteres schnell reparierbar gestört wird.

Durch das kappenförmige Element ist gewährleistet, daß mit Werkzeugen ein gewaltsames Entfernen dieses Elements in einer vorgeschriebenen Mindestzeit nicht möglich ist, und daß auch bei einem nach längerer Manipulation über die vorgeschriebene Sicherheitszeit hinaus erreichten Zutritt zum Magnetventil eine Inbetriebnahmekraftstoffversorgungseinrichtung bleibend verhindert wird.

In vorteilhafter Ausgestaltung nach Pantentanspruch 2 ist die Sicherheitsanordnung so ausgeführt, daß sie spahnenden und schneidenden Werkzeugen einen erheblichen Widerstand entgegensetzt. Insbesondere Manganstahl ist extrem schlecht spanend bearbeitbar und schlagzäh. Es läßt sich auch als Gußstahl verarbeiten, sodaß eine optimierende Formgebung für das kappenförmige Element möglich ist ohne kerbempfindliche Kanten, die die Widerstandsfähigkeit absenken könnten.

In vorteilhafter Weiterbildung nach Anspruch 3 wird das kappenförmige Element durch eine Schraubverbindung am umschlossenen Teil der Kraftstoffversorgungseinrichtung inliegend befestigt und durch ein nur durch Zerstören entfernbares Teil vom Außenzugriff geschützt. Dies können in das kappenförmige Element in eine Austrittsöffnung einpreßbare Formteile sein, die nur äußerst erschwert unter Gewalteinwirkung entfernbar sind.

In weiter vorteilhafter Ausgestaltung gemäß Patentanspruch 4 erfolgt eine Verbindung des kappenförmigen Elements mit dem umschlossenen Teil der Kraftstoffversorgungseinrichtung durch eine innenliegende Rastverbindung, die keinen Zugang mehr nach außen hat. Damit kann die Kappe nur noch durch Zerstörung aus ihrer Einbaulage entfernt werden.

Gemäß Patentanspruch 6 ist das die Sollbruchstelle aufweisende Teil aus einem Material, das eine wesentlich geringere Zähigkeit aufweist als das Material des kappenförmigen Elements. Durch das konstruktiv vorgegebene Widerstandsmoment ist so gewährleistet, daß in jedem Falle ein Bruch im Bereich des vom kappenförmigen Element umschlossene Teils Kraftstoffversorgungseinrichtung erfolgt, bevor das kappenförmige Element selbst zerstört wird. In vorteilhafter Weise wird gemäß Patentanspruch 7 die Verbindung zwischen kappenförmigem Element und dem umschlossenen Teil der Kraftstoffversorgungseinrichtung durch eine formschlüssige Verbindung an einem Funktions- oder Einstellelement hergestellt. Dazu weist das Funktions- oder Einstellelement Rast- oder Formschlußflächen auf, an denen Rast- oder Formschlußflächen des kappenförmigen Elements angreifen. Dies können Schraubverbindungen sein oder z. B. auch Formschlußverbindungen oder Schnappbindungen. Durch das kappenförmige Element können dabei mehrere Funktions- oder Einstellelemente vor dem Zugriff gesichert werden, z. B. insbesondere ein Magentventil gemäß Patentanspruch 11 und eine dieses ansteuernde mit einem Sicherheitscode versehene elektrische Sicherheitsschaltung. Die Sicherheitsschaltung verhindert dabei den elektrischen Zugriff auf das Funktions- und Einstellelement Magentventil und das kappenförmige Element den mechanischen Zugriff zu demselben, um zu verhindern, daß u. a. eine die Sicherheitsschaltung umgehende elektrische Kontaktierung am Magnetventil vorgenommen wird oder am Magnetventil manipuliert oder dieses durch eine Verschlußschraube ersetzt wird.

Besonders vorteilhaft erfolgt die Verbindung des kappenförmigen Elements mit dem von ihm umschlossenen Teil an einem Stutzen, der einen Durchgangskanal zum Innern der Kraftstoffversorgungseinrichtung aufweist. An einem solchen Stutzen läßt sich eine Sollbruchstelle besonders vorteilhaft verwirklichen und ein solcher Stutzen ist vorteilhaft zugleich auch eine Aufnahme für ein Funktions- oder Einstellelement, das wesentliche Einstellfunktionen im Innern der Kraftstoffversorgungseinrichtung beherrscht. Durch Abbrechen des Stutzens ist vorteilhaft die Wand zum Innern der Kraftstoffversorgungseinrichtung durchbrochen, so daß Kraftstoff aus den kraftstoffführenden Räumen derselben austreten kann und somit eine Funktionsstörung der Kraftstoffversorgungseinrichtung erfolgt. Insbesondere bei Dieselkraftstoffeinspritzpumpen dient der Innenraum der Aufnahme eines aus Kraftstoff gebildeten Steuerdrucks der wesentlichen Funktionen der Kraftstoffeinspritzpumpe steuert. Zudem wird die Funktion einer Kraftstoffeinspritzpumpe sehr schnell gestört, wenn in Folge von Leckstellen Luft in den Innenraum gelangt. In weiterhin vorteilhafter Weitergestaltung handelt es sich bei den Funktions- oder Einstellelement, mit dem das kappenförmige Element verbunden ist, um eine Einstellschraube zur Einstellung der Grundeinstellung der Einspritzung an einer Kraftstoffeinspritzpumpe. Bricht eine solche Schraube an ihrer gemäß dem Anspruch 12 gebildeten Befestigungsstelle aus, so ist nicht nur der Kraftstoffinnenraum nach außen geöffnet, sondern auch die Einstellung der Kraftstoffeinspritzpumpe so verstellt, daß das zugehörige Fahrzeug nicht mehr fahrbar ist. Dabei kann die Sollbruchstelle auch so gelegt werden, daß ein nachträgliches Wiedereinstecken des Funktions- oder Einstellelement mit einer provisorischen Fixierung die Abdichtung gemäß Ausgestaltung nach Patentanspruch 16 nicht mehr gewährleistet ist. Zudem ist die erforderliche Genauigkeit der Einstellung durch eine solche Einstellschraube so hoch, daß eine provisorische Wiederbefestigung in der Regel die Kraftstoffeinspritzpumpe mit zugehöriger Brennkraftmaschine nicht mehr fahrbar machen kann. Weitere vorteilhafte Ausgestaltungen der Erfindung sind in den Unteransprüchen 19 bis 24 aufgeführt, die verschiedene vorteilhafte Möglichkeiten der Befestigung des kappenförmigen Elements mit dem von ihn umschlossenen Teil der Kraftstoffversorgungseinrichtung aufzeigen.

### Zeichnung

Fünf Ausführungsbeispiele der Erfindung sind in der Zeichnung dargestellt und werden in der nachfolgenden Beschreibung näher erläutert. Es zeigen Figur 1 einen Teilschnitt durch eine Kraftversorgungseinrichtung in Form einer Verteilereinspritzpumpe, Figur 2 einen Schnitt durch das erfindungsgemäße kappenförmige Element mit seiner Verbindung zu einem Einstell- oder Funktionselement in einer ersten Ausführungsform, Figur 3 die Ausführung der Verbindung des kappenförmigen Elements mit einem Einstellelement in einer zweiten Ausführung, Figur 4 die Verbindung des kappenförmigen Elements mit einem Einstellelement in einer dritten Ausführung, Figur 5a eine vierte Ausführung 30 mit einer Varianten der Befestigung des kappenförmigen Elements an einer Einstellschraube einer Kraftstoffeinspritzpumpe, Figur 5b einen Schnitt durch das kappenförmige Element, das zur Befestigung an der Einstellschraube nach Figur 5a vorgesehen ist, Figur 6a eine fünfte Ausführungsform der Verbindung des kappenförmigen Elements mit der Kraftstoffversorgungseinrichtung in Form einer Schnappverbindung und Figur 6b das zugehörige kappenförmige Element zur Befestigung auf der Einstellschraube gemäß Figur 6a.

### Beschreibung

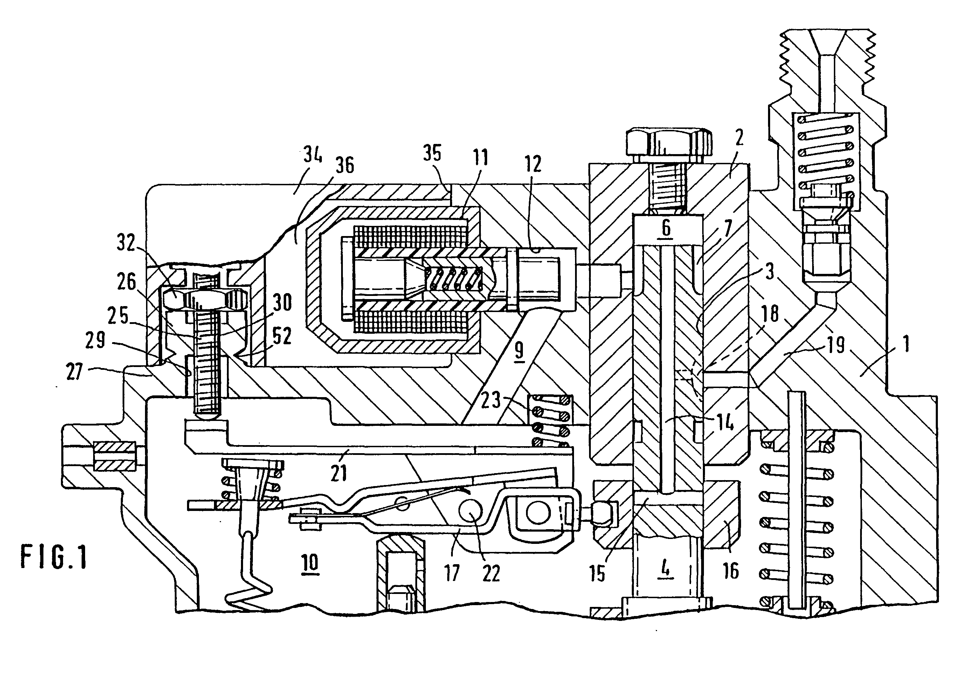

Für den Anwendungsfall bei einer Verteilerkraftstoffeinspritzpumpe ist in Figur 1 schematisch ein Schritt durch eine Hubkolbenverteilereinspritzpumpe dargestellt. Dabei ist in einem Gehäuse 1 eine Buchse 2 eingesetzt, in deren Zylinderbohrung 3 ein Pumpenkolben 4, der zugleich als Verteilerkolben dient, hin und her gehend in nicht weiter dargestellter Weise bewegt wird. Stirnseitig schließt der Pumpenkolben 4 einem Pumpenarbeitsraum 6 mit dem geschlossenen Ende der Zylinderbohrung 3 ein. Der Pumpenarbeitsraum wird über Längsnuten 7 beim Saughub des Pumpenkolbens über eine in die Zylinderbohrung 3 mündende Saugleitung 9 mit Kraftstoff gefüllt. Die Saugleitung 9 führt von einem Saugraum 10 der Kraftstoffeinspritzpumpe ab, der mit Kraftstoff gefüllt ist, der auf einen Steuerdruck geregelt ist. Zum Beispiel ist der Steuerdruck drehzahl- und/oder lastabhängig gesteuert und dient der Steuerung eines Spritzbeginnverstellers, der, da bekannt, hier nicht weiter dargestellt ist. Der Durchtrittsquqerschnitt der Saugleitung wird durch ein Einstell- oder Funktionselement in Form eines Magnetventils 11 bekannter Ausgestaltung gesteuert, das in eine Bohrung 12 von außerhalb in das Pumpengehäuse 1 eingeschraubt ist. Zur Betriebsaufnahme wird das Magnetventil erregt und öffnet die Saugleitung 9. Zum Stillsetzen der von der Kraftstoffeinspritzpmpe versorgtene Brennkraftmaschine wird das Magnetventil 11 geschlossen. Der Pumpenarbeitsraum ist über einen Längskanal 14, der von der Stirnseite des Pumpenkolbens ausgehend in diesem verläuft und über eine Querbohrung 15 in einem in den Saugraum 10 ragenden Teil des Pumpenkolbens mit dem Saugraum 10 verbunden. Die Mündung wird dabei durch einen Regelschieber 16 der Kraftstoffeinspritzpumpe gesteuert, der durch einen Reglerhebel 17 verstellbar ist. Je nach axialer Stellung des dicht auf der Mantelfläche des Pumpenkolbens gleitenden Regelschiebers wird der Pumpenarbeitsraum früher oder später während des Druckhubs des Pumpenkolbens geöffnet, so daß der Pumpenarbeitsraum unter Beendigung einer Hochdruckeinspritzung entlastet wird. Zur Hochdruckeinspritzung ist der Längskanal 14 über eine Verteilernut 18 jeweils mit einer Einspritzleitung 19 beim jeweiligen Hub des Pumpenkolbens verbunden, die zu einem hier nicht weiter gezeigtem Kraftstoffeinspritzventil führt. Im Laufe der Drehung des Pumpenkolbens kommt pro Pumpenkolbenhub nacheinander jeweils eine andere Einspritzleitung 19 mit der Verteilernut 18 Überdeckung.

Die der Steuerung des Regelschieber 19 dienenden Reglerhebel sind auf einem Einstellhebel 21 gelagert, der um eine ortsfeste Achse 22 gegen die Kraft einer Feder 23 schwenkbar ist. Zur Einstellung der Schwenklage des Einstellhebels, der durch diese Schwenklage die Ausgangsposition des Regelschiebers 16 einstellt, ist als Einstell- oder Funktionselement eine Einstellschraube 25 vorgesehen, die in einen Stutzen 26 der Begrenzungswand 27 des Saugraums 10 eingeschraubt ist. Der Stutzen weist eine Durchgangsbohrung 29 auf mit einem Innengewinde 30, in das das Außengewinde 31 der Einstellschraube 25 eingeschraubt ist. Zur Fixierung der Einschraubtiefe der Einstellschraube ist eine Kontermutter 32 auf das Außengewinde 31 geschraubt, die sich an der Stirnseite des Stutzens 26 abstützt.

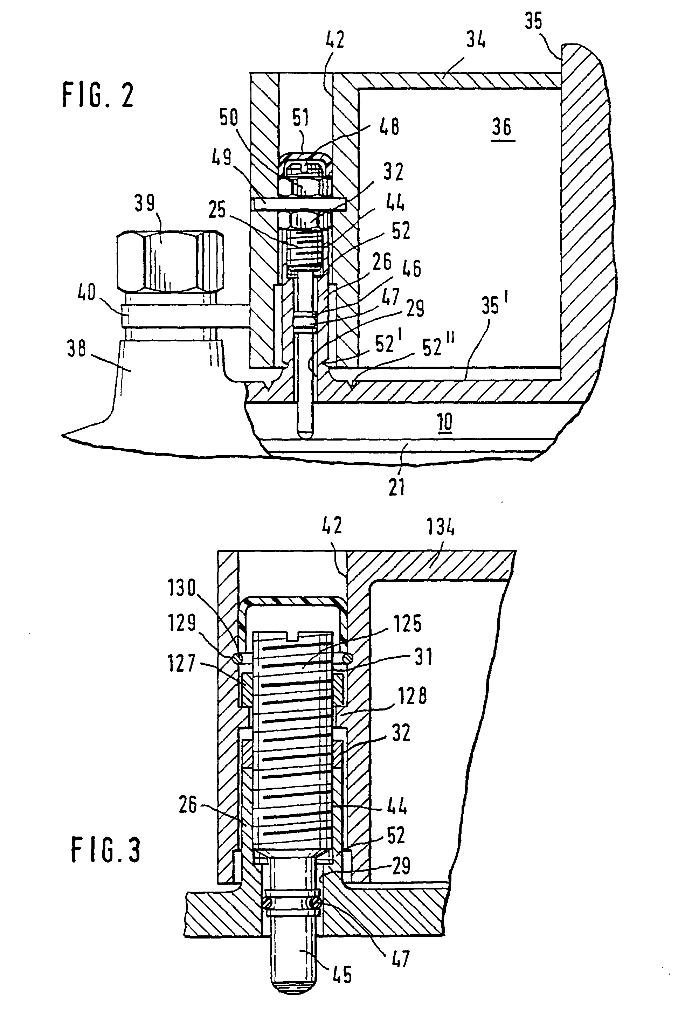

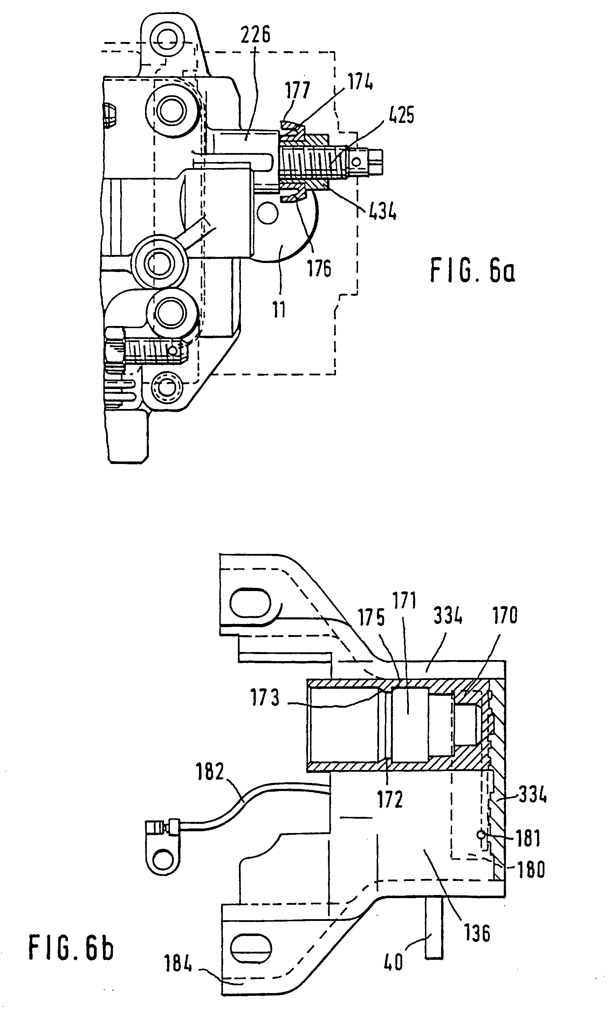

Die bisherige Darstellung der Kraftstoffeinspritzpumpe gemäß Figur 1 entspricht einer üblichen bekannten Verteilereinspritzpumpe der Hubkolbenbauart, bei der nun ein Zugriff auf das Magnetventil 11 verhindert werden soll, damit nach einem Stillsetzen der Kraftstoffeinspritzpumpe bzw. der zugehörigen Brennkraftmaschine ein Unberechtigter nicht durch Bestromen oder Manipulation am Magnetventil die Kraftstoffeinspritzpumpe wieder funktionsbereit machen kann, indem die Saugleitung 9 im geöffneten Zustand ersetzt wird. Dies kann z. B. auch dadurch geschehen, daß das Magnetventil aus der Bohrung 12 ausgeschraubt wird und diese durch eine Verschlußschraube verschlossen wird. Als Abhilfe dafür ist ein kappenförmiges Element 34 vorgesehen, das bündig an die Gehäuseoberfläche 35 des Gehäuses der Einspritzpumpe anschließt und im Innern zusammen mit der Gehäuseoberfläche das Magnetventil 11 als Einstell- oder Funktionselement einschließt. Die Befestigung des kappenförmigen Gehäuses erfolgt am aus den Stutzen 26 herausragenden Ende der Einstellschraube, die ebenfalls ein Einstell- oder Funktionselement darstellt. Diese Befestigung wird in den nachfolgenden Figuren 2 bis 6b näher dargestellt und zwar in verschiedenen Ausführungsformen. Innerhalb des Innenraumes 36, der zwischen der Gehäuseoberfläche 35 und dem kappenförmigen Element 34 gebildet wird, ist weiterhin eine in Figur 6b angedeutete Sicherheitsschaltung 18a vorgesehen, die zwischen einer elektrischen, hier nicht weiter dargestellten Steuer- und/oder Versorgungsleitung und dem Magnetventil 11 eingesetzt ist. Diese Sicherheitsschaltung erlaubt eine Erregung des Elektromagneten des Magnetventils erst bei speziellen Voraussetzungen, die z. B. ein Sicherheitscode sein können und die sicherstellen, daß nur der befugte Benutzer die Kraftstoffeinspritzpumpe in Betrieb nehmen kann, um damit wiederum eine Brennkraftmaschine bzw. ein zugehöriges Kraftfahrzeug zu betreiben.

Figur 2 zeigt ein erstes Ausführungsbeispiel des erfindungsgemäßen kappenförmigen Elements 34. Wie man sieht, schließt dieses bündig an eine hier senkrecht dargestellten Gehäuseoberfläche 35 an, in die beispielsweise die Bohrung 12 von Figur 1 eingebracht ist, die hier aber zusammen mit dem Magnetventil nicht weiter dargestellt ist. Die im rechten Winkel zu der Gehäuseoberfläche 35 verlaufende Gehäuseoberfläche 35' weist den Stutzen 26 auf und einen weiteren, außerhalb des kappenförmigen Elements liegenden Stutzen 38, in den eine Schraube 39 eingeschraubt ist. Diese dient zur Fixierung einer Lasche 40 mit hier nicht weiter gezeigtem Durchgangsloch, die einstückig von dem kappenförmigen Element 34 rechtwinklig absteht. Im Schnitt erkennt man bei dem kappenförmigen Element 34, das zusammen mit den Gehäuseoberflächen 35, 35' den Innenraum 36 einschließt, eine Ausnehmung in Form einer Durchgangsbohrung 42 zur Aufnahme des Stutzens 26 und den aus diesem herausragenden Teil der Einstellschraube 25. Der Stutzen 26 weist das Innengewinde 30 auf, in das das Außengewinde 31 der Einstellschraube 25 so eingeschraubt ist, daß das sich an das Außengewinde anschließende Teil der Einstellschraube durch die Durchgangsbohrung 29 des Stutzens hindurch in den Saugraum 10 ragt und dort als Anschlag für den Einstellhebel 21 dient und wie zu Figur 1 erwähnt. Zur Dichtung des Saugraums 10 nach außen ist an der Einstellschraube zwischen zwei Bünden 46 eine Rundschnurdichtung 47 (O-Ring) eingelegt, die zur Innenwand der Durchgangsbohrung 29 des Stutzens 26 im Bereich zwischen Innengewinde 30 und Eintritt der Durchgangsbohrung in den Saugraum 10 diesen nach außen abdichtet. Zur Einstellung weist die Einstellschraube auf ihrer außenliegenden Stirnseite einen Schlitz 48 auf und in der justierten Stellung wird die Einstellschraube dann mit der Kontermutter 32 gesichert. In diesem Zustand wird über die Einstellschraube dann das kappenförmige Element geführt, das in der Innenwand der Durchgangsbohrung 42 einen in die Bohrung 42 ragende Sicherungsring aufweist oder einen Sicherungsstift 49 aufweist, der sich quer durch die Durchgangsbohrung 42 erstreckt. Dieser Sicherungsring oder Sicherungsstift 49 ist der Mutter 32 unmittelbar benachbart.

Anschließend wird auf das Gewindeende Einstellschraube ein Aufschraubteil bzw. eine zweite Mutter 50 aufgeschraubt, so daß der Sicherungsring bzw. Sicherungsstift zwischen beiden Muttern zu liegen kommt und verhindert, daß nach das kappenförmige Element 43 wieder abgenommen werden kann. Um den Zutritt zu diesem Aufschraubteil 50 zu verhindern, ist bündig an die Innenwände der Durchgangsbohrung 42 anschließend eine Verschlußkappe 51 in die Durchgangsbohrung eingepresst. Diese kann nur durch Zerstörung wieder aus der Durchgangsbohrung entfernt werden.

Auf die beschriebene Art und Weise wird eine feste Verbindung zwischen dem kappenförmigen Element 34 und einem vom kappenförmigen Element umschlossenen Teil der Kraftstoffversorgungseinrichtung hergestellt, die nachträglich nicht mehr ohne weiteres lösbar ist. Die weiterhin vorgesehene Lasche 40 dient lediglich zur relativ beweglichen Fixierung des klappenförmigen Elements in der Einbaulage und zur Entlastung der Befestigungsstelle im vom kappenförmigen Element umschlossenen Teil der Kraftstoffversorgungseinrichtung. Wird nun an kappenförmigen Element 34 manipuliert, bricht als aller erstes die Lasche 40 ab, ohne daß das kappenförmige Element deswegen aus seiner montierten Position entfernt werden kann. Der formschlüssige Anschluß an das Gehäuse der Kraftstoffversorgungseinrichtung verhindert außerdem ein Verdrehen des kappenförmigen Elements. Wird weiterhin an dem kappenförmigen Element mit dem Ziel des Entfernens manipuliert, so ist der Stutzen 26 so ausgelegt, daß unter Krafteinwirkung ein Bruch an einer Sollbruchstelle 52 am Stutzen auftritt. Diese Sollbruchstelle liegt vorzugsweise im Bereich zwischen dem Gewinde 30 und der weiterführenden Durchgangsbohrung 29 des Stutzens 26 zum Saugraum 10 hin. Vorteilhaft sind auch Anordnungen von Sollbruchstellen 52' oder 52'' im Bereich des Übergangs zwischen Stutzen 26 und Begrenzungswand 27. Bei einem Bruch des Stutzens 26 läßt sich dann zwar das kappenförmige Element 34 entfernen und ein Zugang zu einem anderen Einstell- oder Funktionsteil, wie z. B. dem Magentventil 11 wäre ermöglicht, doch ist wegen des Bruches nun die Begrenzungswand 27 des Saugraumes 10 an der Stelle des Stutzens 26 zerstört, so daß hier Kraftstoff austreten kann. Selbst wenn die Einstellschraube 25 nachträglich wieder an diese Stelle eingesetzt wird, ist die Einstellage nicht ohne weiteres reproduzierbar, so daß die Basiseinstellung der Kraftstoffeinspritzpumpe hier in der Regel derart verändert wird, daß die Fahrbarkeit einer Brennkraftmaschine mit dieser Kraftstoffeinspritzpumpe nicht mehr gewährleistet ist. Liegt die Sollbruchstelle oberhalb der Rundschnurdichtung, wäre eine Abdichtung des Saugraums 10 nach außen noch möglich. Liegt die Sollbruchstelle dagegen vorzugsweise zwischen der Abdichtung durch die Rundschnurdichtung 47 und dem Saugraum 10, so ist eine Wiederherstellung der Dichtheit der Begrenzungswand 27 nicht ohne weiteres möglich. In jedem Fall bedarf es für eine Reparatur einen erheblichen Zeitaufwand, der als Sicherheitszeitspanne vorgegeben ist. Die erfindungsgemäße Sicherheitsanordnung soll dementsprechend auch nicht grundsätzlich ein Zugang zu den Einstell- oder Funktionselementen verhindern, sondern vermeiden, daß der Zugang innerhalb einer Sicherheitszeit erzielt wird, derart, daß innerhalb dieser Zeit auch das zur Kraftstofferversorgungseinrichtung gehörende Fahrzeug betriebsbereit gemacht werden kann.

Sollbruchstellen 52' oder 52'', die im unmittelbar an den Stutzen 26 angrenzenden Bereich der Begrenzungswand 27 vorgesehen werden, stellen ein Wiederdichtmachen und damit ein Wiederbetreiben der Kraftstoffeinspritzpumpe stark in Frage. Hier wäre eine Justierung des Einstellelements und eine Abdichtung des Saugraumes noch schwieriger. Aufgrund der Undichtigkeit tritt in der Regel Luft in den Saugraum 10 ein, die alsbald zu einer Funktionsstörung der Kraftstoffeinspritzpumpe führt oder aber es kann sich dann der notwendige Steuerdruck zum störungsfreien Betrieb der Kraftstoffeinspritzpumpe und der dazugehörige Brennkraftmaschine nicht aufbauen.

Bei dem Ausführungsbeispiel nach Figur 3 ist eine als Einstell- oder Funktionselement dienende Einstellschraube 125 vorgesehen, mit einem Außengewinde 31, das in das Innengewinde 44 der Durchgangsbohrung 29 des Stutzens 26 eingeschraubt ist, analog dem Ausführungsbeispiel nach Figur 2. Der sich an das Außengewinde 31 zum Saugraum 10 hin anschließende bolzenförmige Teil 45 des der Einstellschraube 125 trägt wiederum die Rundschnurdichtung 47, die mit der Durchgangsbohrung 29 die Abdichtung nach außen vornimmt. Zur Sicherung der Einschraubtiefe ist auf der Einstellschraube 125 wiederum die Mutter 32 aufgeschraubt, die sich an der Stirnseite des Stutzens 26 abstützt. Zwischen dieser Mutter 32 und dem Aufschraubteil 127 ragt von der Innenwand der Durchgangsbohrung 42 ein Ringsteg 128 ins Innere der Durchgangsbohrung 42 hinein, derart, daß das kappenförmige Element 134 nur im Rahmen des Spieles zwischen Mutter 32 und Aufschraubteil 127 bewegbar ist. Als zusätzliche Sicherung ist auf der dem Saugrohr 10 abgewandten Seite des Aufschraubteils 127 in eine Innenringnut 129 der Durchgangsbohrung 42 ein Sprengring 130 eingesprengt, der verhindert, daß das Aufschraubteil 127 ausgeschraubt werden kann. Anschließend ist wie beim Ausführungsbeispiel nach Figur 2 die Durchgangsbohrung 42 durch die Verschlußkappe 51 verschlossen, die bis zu dem als Sicherungsring dienenden Sprengring 130 eingetrieben wird. Die Sollbruchstelle 52 ist auch hier am Übergang zwischen dem Innengewinde 44 und dem sich anschließenden zum Saugraum 10 hin verlaufenden Teil der Durchgangsbohrung 29 vorgesehen.

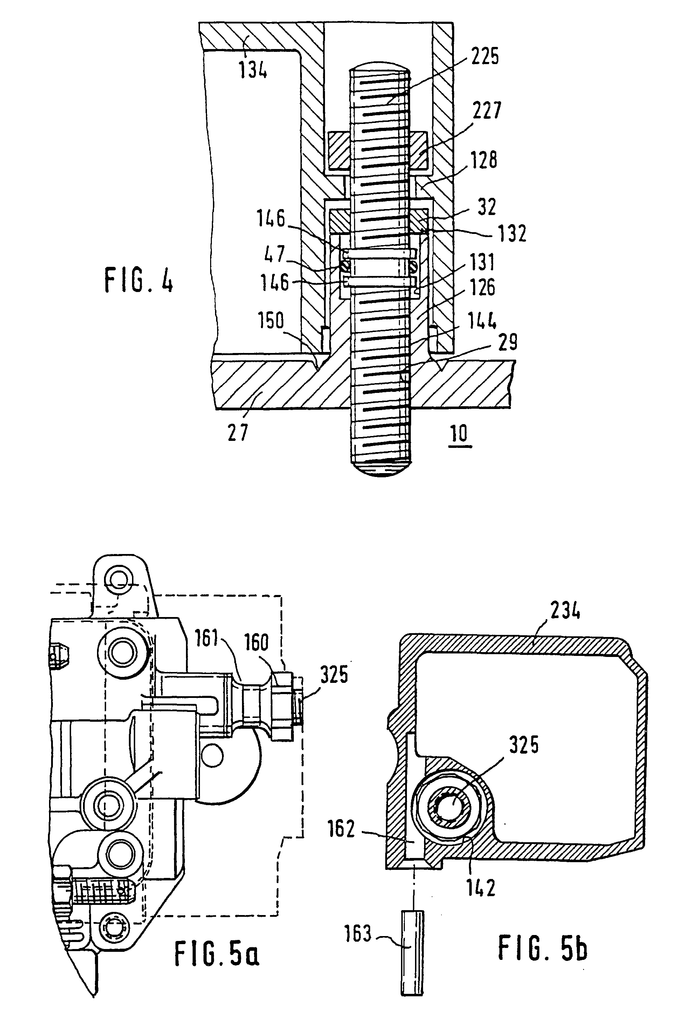

Bei der Ausführungsvariante nach Figur 4 ist das kappenförmige Element 134 in gleicher Weise ausgebildet, wie beim Ausführungsbeispiel nach Figur 3 mit dem Ringsteg 128, der zwischen Mutter 32 und dem Aufschraubteil 127 zu liegen kommt. Bei Ausführungsbeispiel nach Figur 3 liegt das Innengewinde 144 nunmehr in dem unmittelbar an den Saugraum 10 angrenzenden Teil der Durchgangsbohrung 29. Die Abdichtung erfolgt in einem sich daran nach außen anschließenden, im Durchmesser erweiterten Teil 131 der Durchgangsbohrung 29, die an der Stirnseite 132 des Stutzens 126 austritt. Innerhalb dieses im Durchmesser erweiterten Teils 131 weist die Einstellschraube 225 nun die vom Ausführungsbeispiel nach Figur 1 bekannten Bünde 146 auf, zwischen denen als Dichtung die Rundschnurdichtung 47 eingelegt ist. Die Sollbruchstelle bei diesem Ausführungsbeispiel ist als Einkerbung 150 in der Begrenzungswand 27 ausgeführt, derart, daß die Einkerbung sich ringförmig unmittelbar angrenzend an den Durchmesser des Stutzens 126 anschließt. Bei dieser Konstruktion folgt also ein Bruch direkt in der Begrenzungswand 27, die den kraftstoffführenden Saugraum 10 einschließen soll. Die Abdichtung zum Saugraum 10 hin liegt bei diesem Ausführungsbeispiel jenseits der Sollbruchstelle 150, so daß ein Wiedereinsetzen des abgebrochenen Stutzens 126 zusammen mit der Einstellschraube 225 eine Dichtheit der Begrenzungswand 27 mehr herstellen kann, wobei der weitere Vorteil darin besteht, daß bei einer ausgebrochenen Wand es noch wesentlich schwieriger ist, das ausgebrochene Teil wieder exakt in ursprüngliche Position zu bringen, damit die erforderliche Grundeinstellung der Kraftstoffeinspritzpumpe wiederhergestellt würde. Ein Dauerbetrieb einer solchermaßen beschädigten Kraftstoffeinspritzpumpe ist nicht möglich.

Bei dem vierten Ausführungsbeispiel nach den Figuren 5a und 5b ist die Kontermutter 160, die die Funktion der Kontermutter 32 in den vorstehenden Ausführungsbeispielen hatte, mit einer Ringnut 161 versehen, die Raum läßt, quer zur Achse der Einstellschraube 325 einen Stift in das kappenförmige Element 234 einzutreiben wie es in Figur 5b gezeigt ist. Dort ist in einem Schnitt senkrecht der Achse der Einstellschraube 325 durch die Mitte der Ringnut 161 hindurch gezeigt, daß in dem kappenförmigen Element 234 eine die Durchgangsbohrung 142 des kappenförmigen Elements schneidende Sackbohrung 162 vorgesehen ist, deren Lage zur Achse des Einstellelements 325 so ist, daß ein Stift 163 bündig in die Ringnut 161 eingreifen anschließend in Sackbohrung 162 eingetrieben werden kann. Aufgrund der Ausgestaltung als Sackbohrung kann der Stift nicht durch weiteres Eintreiben wieder ausgetrieben werden und er könnte allenfalls ausgebohrt werden. Vorteilhaft ist deshalb der Stift 163 als gehärteter Stahlstift ausgeführt, der nicht ohne weiteres ausgebohrt werden kann. Das kappenförmige Element selber besteht aus einem zähen, schwer spanbaren Material wie z. B. Manganstahl oder Manganhartstahl, oder Mangangußstahl. Diese Eigenschaft bewirkt, daß das demgegenüber sprödere Material der Begrenzungswand oder des Stutzens an der Sollbruchstelle bricht, bevor es zu einer Zerstörung des kappenförmigen Elements kommt.

Im letzten Ausführungsbeispiel nach Figuren 6a und 6b ist das kappenförmige Element 334 auf seiner Innenseite mit einem napfartigen Teil 170 verbunden, dessen Innenraum 171 der Außenkontur der aus dem Stutzen 226 herausragenden Einstellschraube 425 mit Kontermutter 432 angepaßt ist. Weiterhin weist der napfartige Teil 170 einen Ringbund 172 auf, der in den Innenraum 171 ragt und zum Stutzen 226 hin eine Einführschräge 173 aufweist. Zwischen der Kontermutter 432 und der Stirnseite 174 des Stutzens 226 ist ein Rastelement 176 vorgesehen, mit zum Stutzen 226 weisenden federnden Armen 177, die beim Aufstecken des kappenförmigen Elements 33 auf die Einstellschraube 425 über die Einführungsschräge 173 gleiten und an der der Einführschräge 173 gegenüberliegenden Rastfläche 175 des Ringbundes 172 einrasten. Ein so mit der Kraftstoffversorgungseinrichtung verrastetes kappenförmiges Elements 134 ist nur noch durch Zerstören wieder entfernbar. In dem neben dem napfförmigen Teil 170 liegenden Innenraum 136 kommt dann das Magnetventil 11 zuliegen. In diesem Innenraum ist auch die Sicherheitsschaltung 180 angeordnet, die somit auch nicht mehr zugänglich ist und die nur durch eine kleine leitungsführende Öffnung 181 Verbindung zur Umwelt hat. Gezeigt ist in Figur 6b auch das Verbindungskabel 182 zum Magnetventil 11. Zusätzlich kann das kappenförmige Element noch über Flansche 184 schwingungssicher an der Kraftstoffversorgungseinrichtung bzw. der Kraftstoffeinspritzpumpe befestigt werden.

## Patentansprüche

1. Sicherheitsanordnung gegen unbefugten Eingriff zu einem Einstell- oder Funktionselement (11, 25), das aus der Begrenzungswand (27) einer Kraftstoffversorgungseinrichtung, insbesondere einer Kraftstoffeinspritzpumpe, heraustritt, mit einem an der Kraftstoffversorgungseinrichtung fixierten kappenförmigen Element (34), das das an der Begrenzungswand (27) heraustretende Einstell- oder Funktionselement (11, 25) übergreift und zusammen mit der Begrenzungswand (27, 35) einschließt, **dadurch gekennzeichnet, daß** das kappenförmige Element (34) so mit der Kraftstoffversorgungseinrichtung verbunden ist, daß ein Entfernen des kappenförmigen Elements von der Kraftstoffversorgungseinrichtung nur durch zerstörende Mittel möglich ist und zusätzlich ein Sollbruchbereich vorgesehen ist derart, daß bei Überschreiten einer bestimmten zerstörerischen Kraft ein Bruch an einer Sollbruchstelle (52) erfolgt, die an dem wenigstens einem Einstell- oder Funktionselement (25) oder der sie tragenden Begrenzungswand (27), insbesondere einer Begrenzungswand von kraftstofführenden Räumen (10), der Kraftstoffversorgungseinrichtung oder an der Begrenzungswand (27) an einer Befestigungsstelle (26) des kappenförmigen Elements mit der Begrenzungswand vorgesehen ist.

2. Sicherheitsanordnung nach Anspruch 1, **dadurch gekennzeichnet, daß** das kappenförmige Element (34) wenigstens eine vom Zugriff geschützte formschlüssige Verbindung mit einem vom kappenförmigen Element (34) umschlossenen Teil der Kraftstoffversorgungseinrichtung hat und aus schwer spanbarem, zähem Werkstoff, insbesondere Manganstahl besteht.

3. Sicherheitsanordnung nach Anspruch 2, **dadurch gekennzeichnet, daß** die Verbindung eine vom Zugriff durch eine nur durch Zerstören entfernbares Teil geschützte Schraubverbindung ist.

4. Sicherheitsanordnung nach Anspruch 2, **dadurch gekennzeichnet, daß** die Verbindung eine innen liegende Rastverbindung (172, 176) ist.

5. Sicherheitsanordnung nach Anspruch 2, **dadurch gekennzeichnet, daß** die Verbindung eine vom Zugriff durch ein nur durch Zerstören entfernbares Teil (49, 51, 163) geschützte Formschlußverbindung ist.

6. Sicherheitsanordnung nach einem der Ansprüche 2 bis 5, **dadurch gekennzeichnet, daß** das die eine Sollbruchstelle (52) aufweisende Teil (26, 27) in einem Material ausgeführt ist, das eine wesentlich geringere Zähigkeit aufweist als das Material des kappenförmigen Elements (34).

7. Sicherheitsanordnung nach Anspruch 6, **dadurch gekennzeichnet, daß** das umschlossene Teil das Funktions- oder Einstellelement (25) aufnimmt, über das die formschlüssige Verbindung zwischen dem kappenförmigen Element (34) und dem umschlossenen Teil herstellt wird.

8. Sicherheitsanordnung nach Anspruch 7, **dadurch gekennzeichnet, daß** zur formschlüssigen Verbindung des kappenförmigen Elements (234, 334) mit dem Funktions- oder Einstellelement (325, 425) dieses mit Rast- (176) oder Formschlußflächen (161) versehen ist, in die Rast- (175) oder Formschlußflächen (163) des kappenförmigen Elements (234, 334) eingreifen.

9. Sicherheitsanordnung nach Anspruch 7, **dadurch gekennzeichnet, daß** das kappenförmige Element (35, 35', 127) mehrere Funktions- oder Einstellelemente zusammen mit der Wand der Kraftstoffversorgungseinrichtung einschließt.

10. Sicherheitsanordnung nach Anspruch 9, **dadurch gekennzeichnet, daß** ein zweites Funktions- oder Einstellelelement (11) über ein elektrisches Signal in eine den Betrieb der Kraftstoffversorgungseinrichtung erlaubende oder eine den Betrieb verhindernde Position bringbar ist.

11. Sicherheitsanordnung nach Anspruch 10, **dadurch gekennzeichnet, daß** das zweite Funktions- oder Einstellelement ein Magnetventil (11) ist, dem eine Sicherheitsschaltung (180) zugeordnet ist, die ebenfalls vom kappenförmigen Element eingekapselt ist.

12. Sicherheitsanordnung nach einem der Ansprüche 7 bis 11, **dadurch gekennzeichnet, daß** das Funktions- oder Einstellelement das die wenigstens eine formschlüssige Verbindung des kappenförmigen Elements mit dem umschlossenen Teil hat, in einem Durchgangskanal (29) in einem an der Wand der Kraftstoffversorgungseinrichtung angeformten Stutzen (26) eingesetzt ist und mit einem Teil des Stutzens (26) formschlüssig verbunden ist, zwischen dem und einem wandnahen Bereich des Stutzens eine Sollbruchstelle (52, 52', 52'', 150) vorgesehen ist.

13. Sicherheitsanordnung nach Anspruch 12, **dadurch gekennzeichnet, daß** Funktions- oder Einstellelement (25) eine Einstellschraube ist, die in der Einstellposition durch eine Kontermutter (32), die sich am Stutzen (26) abstützt, gesichert wird.

14. Sicherheitsanordnung nach Anspruch 13, **dadurch gekennzeichnet, daß** mit der Einstellschraube eine Grundeinstellung der Einspritzung an einer Kraftstoffeinspritzpumpe vorgenommen wird, und bei Entfernen des Einstellelements die Einstellung der Kraftstoffeinspritzpumpe in eine eine Betreibbarkeit einer von der Kraftstoffeinspritzpumpe versorgten Brennkraftmaschine und dem zugehörigen Fahrzeug verhindernde Extremstellung übergeht.

15. Sicherheitsanordnung nach Anspruch 13, **dadurch gekennzeichnet, daß** das die Sollbruchstelle (52) zwischen Gewinde (30, 44) des Stutzens (26) und dem restlichen Teil des Stutzens zur Wand (27) des Kraftstoffversorgungseinrichtung hin vorgesehen ist.

16. Sicherheitsanordnung nach Anspruch 15, **dadurch gekennzeichnet, daß** auf der Einstellschraube (52) ein Dichtelement (47) angeordnet ist, durch das der Durchgangskanal (29) bei eingesetzter Einstellschraube nach außen abgedichtet ist.

17. Sicherheitsanordnung nach Anspruch 16, **dadurch gekennzeichnet, daß** das Dichtelement (47) an einer Stelle der Einstellschraube (225) vorgesehen ist, die im Bereich des an der Sollbruchstelle (150) abbrechenden Teiles liegt.

18. Sicherheitsanordnung nach Anspruch 15, **dadurch gekennzeichnet, daß** das kappenförmigen Element (134) zur formschlüssigen Verbindung mit der Einstellschraube (125) eine den Stutzen (26) und die daraus herausragende Einstellschraube aufnehmende Ausnehmung, vorzugsweise eine Durchgangsbohrung (42), aufweist, in der ein Ringsteg (128) vorgesehen ist, der zwischen der Kontermutter (32) und einem zusätzlichen Aufschraubteil (127) auf die Einstellschraube (125) eingeschlossen wird.

19. Sicherheitsanordnung nach Anspruch 18, **dadurch gekennzeichnet, daß** das Aufschraubteil (50, 127) durch eine in die Ausnehmung von außen eingebrachte Verschlußkappe (51) abdeckbar ist, die zur Seite der Einstellschraube hin Rast- oder Klemmittel hat, die durch die Verschlußkappe in der Ausnehmung (42) eingeschlossen werden.

20. Sicherheitsanordnung nach Anspruch 19, **dadurch gekennzeichnet, daß** das zwischen Verschlußkappe (51) und Aufschraubteil (127), das vorzugsweise eine Mutter ist, ein Federring (129) in eine Ringausnehmung in der Wand der Ausnehmung eingesprengt ist

21. Sicherheitsanordnung nach Anspruch 15, **dadurch gekennzeichnet, daß** das zur formschlüssigen Verbindung des kappenförmige Elements mit der Einstellschraube auf dieser ein elastisch verriegelndes Rastelelement (176) aufgeschraubt ist und die Ausnehmung im kappenförmigen Element als Sackloch (171) ausgeführt ist, das unter Bildung einer Rastverbindung die Gegenfläche (175) zum elastisch verriegelnden Rastelement (176) aufweist.

22. Sicherheitsanordnung nach Anspruch 15, **dadurch gekennzeichnet, daß** das zur formschlüssigen Verbindung des kappenförmige Elements mit der Kraftstoffversorgungseinrichtung am kappenförmigen Teil (234) eine die Ausnehmung (142) schneidendes Sackloch (162) vorgesehen ist, in das ein Formschlußelement (49, 163) bündig einpreßbar ist, das eine Schulter (161, 32) am Funktions- oder Einstellelement oder am Stutzen hintergreift.

23. Sicherheitsanordnung nach Anspruch 22, **dadurch gekennzeichnet, daß** auf der Einstellschraube (325) eine Mutter (160) aufgeschraubt ist, an deren Umfang eine quer zur Achse der Einstellschraube liegenden Ausnehmung (161) eingearbeitet ist und in dem kappenförmigem Element ein Sackloch (162) angeordnet ist, das die Ausnehmung im kappenförmigen Element schneidet und in das ein in die Ausnehmung an der Mutter eingreifender Stift (163) einpreßbar ist.

24. Sicherheitsanordnung nach Anspruch 20, **dadurch gekennzeichnet, daß** das kappenförmige Elememt eine zusätzliche Formschlußverbindung in Form einer vom Element abstehenden Lasche (40) hat, die an die Wand (27) des Gehäuses der Kraftstoffversorgungseinrichtung angeschraubt wird.

## Claims

1. Security arrangement against unauthorized intrusion to a setting or operating element (11, 25) which projects from the limiting wall (27) of a fuel supply device, especially of a fuel injection pump, with a cap-shaped element (34) which is fixed to the fuel supply device and which engages over the setting or operating element (11, 25) projecting on the limiting wall (27) and, together with the limiting wall (27, 35), encloses the said setting or operating element, **characterized in that** the cap-shaped element (34) is connected to the fuel supply device in such a way that it is possible to remove the cap-shaped element from the fuel supply device only by destructive means, there being additionally provided a predetermined breaking region, such that, when a specific destructive force is exceeded, a break occurs at a predetermined breaking point (52) which is provided on the at least one setting or operating element (25) or the limiting wall (27) carrying it, especially a limiting wall of fuel-conducting spaces (10) of the fuel supply device, or on the limiting wall (27) at a fastening point (26) of the cap-shaped element relative to the limiting wall.

2. Security arrangement according to Claim 1, **characterized in that** the cap-shaped element (34) has at least one positive connection, protected from access, to a part of the fuel supply device, the said part being enclosed by the cap-shaped element (34), and consists of tough material, especially manganese steel, difficult to machine-cut.

3. Security arrangement according to Claim 2, **characterized in that** the connection is a screw connection protected from access by a part which can be removed only by destruction.

4. Security arrangement according to Claim 2, **characterized in that** the connection is an internal catch connection (172, 176).

5. Security arrangement according to Claim 2, **characterized in that** the connection is a positive connection protected from access by a part (49, 51, 163) which can be removed only by destruction.

6. Security arrangement according to one of Claims 2 to 5, **characterized in that** the part (26, 27) having a predetermined breaking point (52) is made from a material which has substantially lower toughness than the material of the cap-shaped element (34).

7. Security arrangement according to Claim 6, **characterized in that** the enclosed part receives the operating or setting element (25), via which the positive connection between the cap-shaped element (34) and the enclosed part is made.

8. Security arrangement according to Claim 7, **characterized in that**, for the positive connection of the cap-shaped element (234, 334) to the operating or setting element (325, 425), the latter is provided with catching (176) or positive-connection (161) surfaces, into which catching (175) or positive-connection (163) surfaces of the cap-shaped element (234, 334) engage.

9. Security arrangement according to Claim 7, **characterized in that** the cap-shaped element (35, 35', 127), together with the wall of the fuel supply device, encloses a plurality of operating or setting elements.

10. Security arrangement according to Claim 9, **characterized in that** a second operating or setting element (11) can be brought, via an electrical signal, into a position allowing the fuel supply device to operate or a position preventing operation.

11. Security arrangement according to Claim 10, **characterized in that** the second operating or setting element is a solenoid valve (11) assigned a security circuit (180) which is likewise encased by the cap-shaped element.

12. Security arrangement according to one of Claims 7 to 11, **characterized in that** the operating or setting element has the at least one positive connection of the cap-shaped element to the enclosed part, is inserted in a passage duct (29) in a connection piece (26) integrally formed on the wall of the fuel supply device and is connected positively to a part of the connection piece (26), a predetermined breaking point (52, 52', 52", 150) being provided between this part and a near-wall region of the connection piece.

13. Security arrangement according to Claim 12, **characterized in that** the operating or setting element (25) is an adjusting screw which is secured in the set position by a lock nut (32) supported on the connection piece (26).

14. Security arrangement according to Claim 13, **characterized in that** a basic setting for injection is carried out on a fuel injection pump by means of the adjusting screw, and, when the adjusting element is removed, the setting of the fuel injection pump changes over to an end position which prevents an internal combustion engine, supplied by the fuel injection pump, and the associated vehicle from being capable of operating.

15. Security arrangement according to Claim 13, **characterized in that** the predetermined breaking point (52) between the thread (30, 44) of the connection piece (26) and the remaining part of the connection piece is provided towards the wall (27) of the fuel supply device.

16. Security arrangement according to Claim 15, **characterized in that** there is arranged on the adjusting screw (52) a sealing element (47), by means of which the passage duct (29) is sealed off relative to the outside when the adjusting screw is inserted.

17. Security arrangement according to Claim 16, **characterized in that** the sealing element (47) is provided at a point on the adjusting screw (225) which is located in the region of the part breaking off the predetermined breaking point (150).

18. Security arrangement according to Claim 15, **characterized in that** the cap-shaped element (134) has, for a positive connection to the adjusting screw (125), a recess, preferably a passage bore (42), which receives the connection piece (26) and the adjusting screw projecting from the latter and in which is provided an annular web (128) which is enclosed between the lock nut (32) and an additional part (127) which can be screwed onto the adjusting screw (125).

19. Security arrangement according to Claim 18, **characterized in that** the screw-on part (50, 127) can be covered by a closing cap (51) which is introduced into the recess from outside and which has, relative to the side of the adjusting screw, catching or clamping means which are enclosed in the recess (42) by the closing cap.

20. Security arrangement according to Claim 19, **characterized in that** a spring ring (129) is sprung into an annular recess in the wall of the recess between the closing cap (51) and the screw-on part (127) which is preferably a nut.

21. Security arrangement according to Claim 15, **characterized in that**, for the positive connection of the cap-shaped element to the adjusting screw, an elastically locking catch element (176) is screwed on the latter and the recess in the cap-shaped element is designed as a blind hole (171) which, to form a catch connection, has the counter-surface (175) to the elastically locking catch element (176).

22. Security arrangement according to Claim 15, **characterized in that**, for the positive connection of the cap-shaped element to the fuel supply device, there is provided on the cap-shaped part (234) a blind hole (162) which intersects the recess (142) and into which a positive-connection element (49, 163) can be pressed flush, the said positive-connection element engaging behind a shoulder (161, 32) on the operating or setting element or on the connection piece.

23. Security arrangement according to Claim 22, **characterized in that** there is screwed on the adjusting screw (325) a nut (160), on the circumference of which a recess (161) lying transversely relative to the axis of the adjusting screw is made, and there is arranged in the cap-shaped element a blind hole (162) which intersects the recess in the cap-shaped element and into which can be pressed a pin (163) which engages into the recess on the nut.

24. Security arrangement according to Claim 20, **characterized in that** the cap-shaped element has an additional positive connection in the form of a tab (40) which projects from the element and which is screwed to the wall (27) of the housing of the fuel supply device.

## Revendications

1. Dispositif de sécurité pour protéger contre un accès non autorisé, un élément de réglage ou élément fonctionnel (11, 25) en saillie d'une cloison (27) d'une installation d'alimentation en carburant, notamment d'une pompe d'injection de carburant, comprenant un élément (34) en forme de capuchon, fixé à l'installation d'alimentation en carburant, venant par dessus l'élément de réglage ou élément fonctionnel (11, 25) en saillie par rapport à la cloison (27), et l'enfermant avec la cloison (27, 35),
**caractérisé ce que**
l'élément (34) en forme de capuchon est relié à l'installation d'alimentation en carburant pour que l'enlèvement de cet élément par rapport à l'installation d'alimentation en carburant ne soit possible que par un moyen destructeur et en plus il est prévu une zone de rupture de consigne, de sorte qu'en dépassant une force déterminée, destructrice, le point de rupture de consigne (52) se casse, ce point étant prévu sur au moins un élément de réglage ou élément fonctionnel (25) ou à la cloison (27) qui le porte, notamment la cloison de volumes (10) recevant du carburant de l'installation d'alimentation en carburant ou la cloison (27) d'un point de fixation (26) de l'élément en forme de capuchon avec la cloison.

2. Dispositif de sécurité selon la revendication 1,
**caractérisé en ce que**
l'élément en forme de capuchon (34) présente au moins une liaison par la forme, protégée contre l'accès, avec une partie de l'installation d'alimentation en carburant entourée par l'élément en forme de capuchon (34) et il est réalisé en un matériau dont il est difficile d'enlever des copeaux, c'est-à-dire un matériau dur notamment un acier au manganèse.

3. Dispositif de sécurité selon la revendication 2,
**caractérisé en ce que**
la liaison est une liaison à vis, protégée contre l'accès par une pièce que l'on ne peut enlever que par destruction.

4. Dispositif de sécurité selon la revendication 2,
**caractérisé en ce que**
la liaison est une liaison à encliquetage (172, 176) située à l'intérieur.

5. Dispositif de sécurité selon la revendication 2,
**caractérisé en ce que**
la liaison est une liaison par la forme protégée contre l'accès par une pièce (49, 51, 163) qui ne peut s'enlever que par destruction.

6. Dispositif de sécurité selon l'une quelconque des revendications 2 à 5,
**caractérisé en ce que**
la pièce (26, 27) qui comporte un point de rupture de consigne (52) est réalisée dans une matière de résistance beaucoup plus faible que celle de l'élément en forme de capuchon (34).

7. Dispositif de sécurité selon la revendication 6,
**caractérisé en ce que**
la pièce entourée reçoit l'élément fonctionnel ou élément de réglage (25) par lequel se réalise la liaison par la forme entre l'élément en capuchon (34) et la pièce qui l'enveloppe.

8. Dispositif de sécurité selon la revendication 7,
**caractérisé en ce que**
pour la liaison par la forme de l'élément en capuchon (234, 334) et de l'élément fonctionnel ou élément de réglage (325, 425), celui-ci est muni de surfaces d'encliquetage ou de liaisons par la forme (161) dans lesquelles pénètrent les surfaces d'encliquetage ou de liaisons par la forme (175, 163) de l'élément en capuchon (234, 334).

9. Dispositif de sécurité selon la revendication 7,
**caractérisé en ce que**
l'élément en forme de capuchon (35, 35', 127) entoure plusieurs éléments fonctionnels ou éléments de réglage avec la paroi de l'installation d'alimentation en carburant.

10. Dispositif de sécurité selon la revendication 9,
**caractérisé en ce qu'**
un second élément fonctionnel ou élément de réglage (11) peut être mis par un signal électrique dans une position autorisant le fonctionnement de l'installation d'alimentation en carburant ou interdisant ce fonctionnement.

11. Dispositif de sécurité selon la revendication 10,
**caractérisé en ce que**
le second élément fonctionnel ou de réglage est une électrovanne (11) associée à un circuit de sécurité (180) également encapsulé par l'élément en forme de capuchon.

12. Dispositif de sécurité selon l'une quelconque des revendications 7 à 11,
**caractérisé en ce que**
l'élément fonctionnel ou de réglage qui a au moins une liaison par la forme de l'élément en capuchon avec la partie entourée est placé dans un ajutage (26) formé dans la paroi de l'installation d'alimentation en carburant et il est relié par une liaison de forme à cette partie de l'ajutage (26), un point de rupture de consigne (52, 52', 52", 150) étant prévu entre cet ajutage et la zone de l'ajutage proche de la paroi.

13. Dispositif de sécurité selon la revendication 12,
**caractérisé en ce que**
l'élément fonctionnel ou de réglage (25) est une vis de réglage bloquée en position de réglage par un contre-écrou (32) s'appuyant contre l'ajutage (26).

14. Dispositif de sécurité selon la revendication 13,
**caractérisé en ce que**
la vis de réglage assure le réglage de base de l'injection d'une pompe d'injection de carburant et en enlevant l'élément de réglage, le réglage de la pompe d'injection de carburant passe dans une position extrême interdisant la mise en route du moteur thermique alimenté par cette pompe d'injection en carburant et le véhicule équipé du moteur.

15. Dispositif de sécurité selon la revendication 13,
**caractérisé en ce que**
le point de rupture de consigne (52) est prévu entre le filetage (30, 44) de l'ajutage (26) et la partie restante de l'ajutage jusqu'à la paroi (27) de l'installation d'alimentation en carburant.

16. Dispositif de sécurité selon la revendication 15,
**caractérisé par**
un élément d'étanchéité (47) prévu sur la vis de réglage (52) qui ferme de manière étanche le canal de passage (22) vers l'extérieur lorsque la vis de réglage est mise en place.

17. Dispositif de sécurité selon la revendication 16,
**caractérisé en ce que**
l'élément d'étanchéité (47) est prévu à un endroit de la vis de réglage (225) situé dans une zone de la partie de rupture du point de rupture de consigne (150).

18. Dispositif de sécurité selon la revendication 15,
**caractérisé en ce que**
l'élément (234) en forme de capuchon présente pour la liaison par la forme avec la vis de réglage (125), une cavité, de préférence un perçage traversant (42) qui reçoit l'ajutage (26) et la vis de réglage qui en dépasse, et une nervure annulaire (128) est prévue dans ce perçage traversant, cette nervure étant serrée entre le contre-écrou (32) et une partie à visser (127) supplémentaire pour la vis de réglage (125).

19. Dispositif de sécurité selon la revendication 18,
**caractérisé en ce que**
la pièce vissée (50, 127) est engagée dans un capuchon de fermeture (51) placé à partir de l'extérieur dans la cavité et qui couvre cette partie vissée, ce capuchon ayant des moyens d'encliquetage ou de serrage du côté de la vis de réglage et qui sont emprisonnés dans la cavité (42) par le capuchon de fermeture.

20. Dispositif de sécurité selon la revendication 19,
**caractérisé en ce qu'**
un anneau élastique (129) est logé dans une cavité annulaire de la paroi de la cavité entre le capuchon de fermeture (51) et la partie vissée (127) qui est de préférence un écrou.

21. Dispositif de sécurité selon la revendication 15,
**caractérisé en ce que**
pour la liaison par la forme de l'élément en capuchon avec la vis de réglage, un élément d'encliquetage (176) à verrouillage élastique est prévu sur celle-ci et la cavité de l'élément en forme de capuchon est constituée par un perçage borgne (171) qui, en constituant une liaison par encliquetage, présente la surface antagoniste (175) pour l'élément d'encliquetage (176) à verrouillage élastique..

22. Dispositif de sécurité selon la revendication 15,
**caractérisé en ce que**
pour la liaison par la forme de l'élément en capuchon et de l'installation d'alimentation en carburant, la pièce en forme de capuchon (234) comporte un perçage borgne (162) qui coupe la cavité (142) et dans laquelle se presse à niveau un élément de liaison par la forme (49, 163) venant prendre derrière un épaulement (161, 32) de l'élément fonctionnel ou de réglage ou de l'ajutage.

23. Dispositif de sécurité selon la revendication 22,
**caractérisé par**
un écrou (160) vissé sur la vis de réglage (325), la périphérie de l'écrou ayant une cavité (161) transversale par rapport à l'axe de la vis de réglage, et l'élément en forme de capuchon comporte un perçage borgne (162) qui coupe la cavité de l'élément en forme de capuchon et dans lequel se presse une broche (163) venant prendre dans la cavité de l'écrou.

24. Dispositif de sécurité selon la revendication 24,
**caractérisé en ce que**
l'élément en forme de capuchon possède une liaison par la forme supplémentaire constituée par une patte (40) en saillie de l'élément et vissée à la paroi (27) de l'installation d'alimentation en carburant.
